Europäisches Patentamt

European Patent Office

Office européen des brevets

(11) Publication number: **0 191 900**
**B1**

# (12) EUROPEAN PATENT SPECIFICATION

(45) Date of publication of patent specification: **10.01.90**

(51) Int. Cl.⁵: **G 01 G 21/24**

(21) Application number: **85112431.3**

(22) Date of filing: **01.10.85**

(54) **A device for transferring forces to be measured to an instrument for measuring forces.**

(30) Priority: **21.02.85 BE 214545**

(43) Date of publication of application:
**27.08.86 Bulletin 86/35**

(45) Publication of the grant of the patent:
**10.01.90 Bulletin 90/02**

(84) Designated Contracting States:
**AT BE CH DE FR GB IT LI LU NL SE**

(56) References cited:
**FR-A-2 383 437**
**GB-A-1 052 721**
**GB-A-1 139 010**

**PATENTS ABSTRACTS OF JAPAN, vol. 9, no. 9
(P-327)1732r, 16th January 1985; & JP-A-59 159
023**

(73) Proprietor: **IVAN A.S.Z. PESCHL**
**Kennedylaan 8**
**NL-6029 RE Sterksel (NL)**

(72) Inventor: **IVAN A.S.Z. PESCHL**
**Kennedylaan 8**
**NL-6029 RE Sterksel (NL)**

(74) Representative: **Sperling, Rüdiger, Dipl.-Ing.
et al
Patentanwälte Dipl.Ing.S. Staeger
Dipl.Ing.Dipl.Wirtsch.Ing. R Sperling
Müllerstrasse 31
D-8000 München 5 (DE)**

Courier Press, Leamington Spa, England.

## Description

The invention is directed to a device according to the general portion of claim 1.

GB—A—1 139 010 shows an automatic batch weigher which has a load sensor. To prevent an extensive movement of the respective weigher elements there is provided an adjustable abutment. The abutment comprises a protrusion being integrally formed on a respective portion of the housing of the weigher element in which protrusion is provided an adjustable screw which determines the vertical way of movement of the weighing elements.

FR—A—23 83 437 shows a similar device as described above for the protection of the spring which device is fastened to the end of the lower level. When the weighing device is overloaded, then the lower level abuts against an adjustment screw which is provided at the end of a respective bracket being fixed to a side wall of the weighing device.

The task of the invention is to provide an amended protection device.

The solution of the invention is characterized in that there are provided means for protection against overload of the instrument for measurement of the forces, said means being a linear-bearing-positioned piston which is reinforced by a spring which spring reinforcement is such that the piston moves only when the force to be measured gets bigger than the nominal force of the instrument for measurement of forces, whereby the movement of said support is limited by a stop piece to such a way that the force on the instrument, equal to the reinforcement and deflection of the spring, stays below the maximal allowed force on the instrument.

In the further dependent claims there are disclosed further advantageous features of the device of the main claim. The present invention is shown on the accompanying drawings and disclosed in the description:

Figure 1 shows schematically an embodiment of the inventive device,

Figure 2 shows a device according to Figure 1 more in detail.

The device for transferring forces to be measured comprises two parallel levers 1, one of the end points of which being fixed to the main frame 2 and the other end point being fixed to a support 4. On the support 4 the forces to be measured or an object (P1, P2) which is to be measured can be fixed at any suitable point or location.

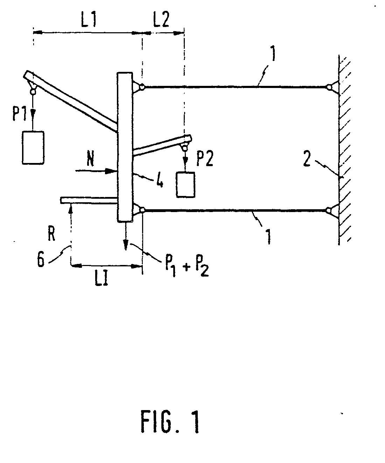

The support 4 is connected to a load cell 6 or another conventional device for measurement of the forces which can convert the forces into an electric, pneumatic of mechanic signal. The searched force in Figure 1 has the reference L.

It has to be pointed out that neither the location of that support nor the position where the forces to be measured are acting nor the position where the load cells or a similar instrument is placed have any influence on the measured forces.

Furthermore all forces in the direction perpendicular to the proposed direction of the forces in question respectively forces in the direction parallel to the lever bars, like the forces N have no influence on the measured forces.

Also the change of the force R at the place of the load cell or other instrument for measurement of forces is equal to the sum of changes of the forces (P1, P2) acting on the support in the direction perpendicular to the direction of the lever bars.

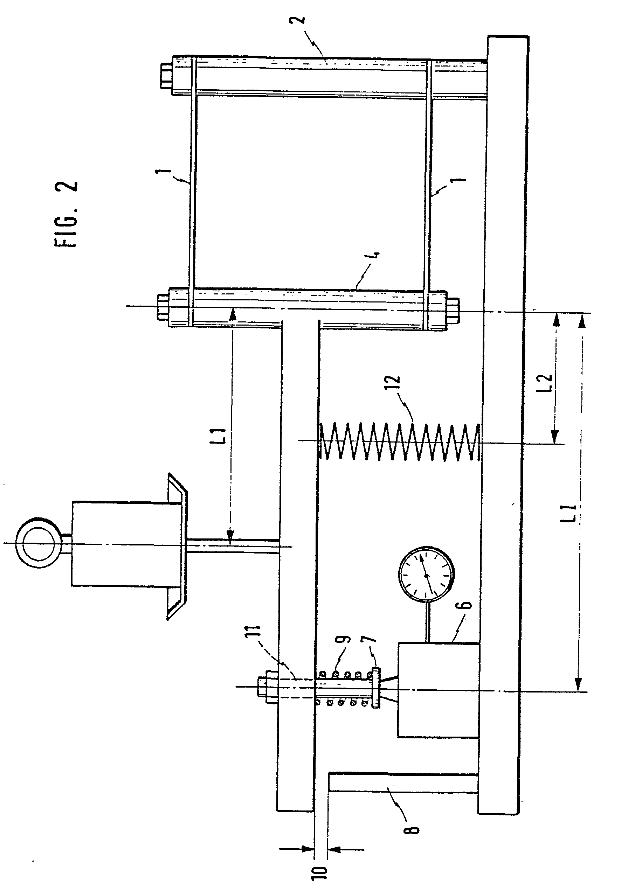

In Figure 2 there is shown a special design of the inventive device, wherein the lever bars 1 are designed as plate springs. The instrument for measurement of forces is a convenional load cell 6.

The support 4 is connected to the plate springs 1 and has a bar on which all forces are acting, which bar on the other hand acts itself on the load cell.

A special characteristic of this construction is that the plate springs 1 made from metal or other elastic material have practically no damping hysteresis, which means that by any change of forces the measurement of the whole system, as a result of an elastic deformation of the instrument for measurement always returns to its initial position and thus there will not occur any deviation regarding the measured forces.

This displacement of the whole system is very small and depends on the load cell 6; it has the magnitude of about 0.1 mm. Due to this small displacement the deformation of the plate springs also is very small with the result, that the hysteresis also is very small and therefore negligible.

For the compensation of the tape weight of the lever system or any other forces which belong to the tare weight there is provided a device consisting of a coil spring 12 which preferably has a very small spring constant by reinforcement of this coil spring each tare weight can be compensated without decreasing the sensitivity of the load cell.

A protection device against the overload of the load cell or the other measurement device is built up by a reinforce piston 7 being positioned in a linear bearing 11 and being reinforced by a coil spring 9.

The movement of this piston 7 downwards is limited by a stop piece 8. The piston being reinforced by said coil spring 9 so that for the forces below maximum of said forces to be measured the protection device is non elastic and for forces above that maximum the coil spring 9 deforms, so that the measuring arm touches the stop piece 8 so that the forces acting on the load cell 6 are limited only by the deformation force of the coil spring 9 according to the distance between the support and the stop piece.

Said coil spring 9 has to be dimensioned in such a way that if the support arm moves over the distance 10 until it touchs the stop piece 8 the forces acting on the load cell stay within allowable values.

This is possible by such a choice of the spring that the increase of the forces corresponding with the deformation distance 10 is not greater than 10 to 20% of the reinforced force which approximately is 110% to 120% of the maximal weighing force.

## Claims

1. A device for transferring forces to be measured to an instrument (6) for measuring forces, comprising a support (4) for receiving forces and acting upon said instrument (6) said support (4) being movable essentially in the direction of said forces, and comprising a lever assembly (1) being arranged between said support (4) and a fixed frame (2) or wall, whereby said lever assembly (1), comprises at least two levers (1) of essentially the same length, the levers (1) have pivots fixed on one hand with one end at the wall or fixed frame (2) and on the other hand at the support (4) for the forces to be measured and the projections of the axis of the at least two levers (1) in a plane perpendicular to the axis of said levers (1) and parallel to the direction of the movement of said support (4) are spaced apart from each other in the direction of said movement, characterized in that there are provided means for protection against overload of the instrument (6) for measurement of the forces, said means being a linear-bearing-positioned piston (7) which is reinforced by a spring (9), which spring reinforcement is such that the piston moves only when the force to be measured gets bigger than the nominal force of the instrument (6) for measurement of forces, whereby the movement of said support (4) is limited by a stop piece (8) in such a way that the force on the instrument (6), equal to the reinforcement and deflection of the spring, stays below the maximal allowed force on the instrument (6).

2. Device according to claim 1, characterized in that the support (4) comprises arms extending in the plane parallel to the axis of the levers (1) and parallel to the direction of the movement of the support (4).

3. Device according to claim 2, characterized in that said support arms have voluntary direction within said plane.

4. Device according to claim 2 or 3, characterized in that said forces to be measured can be fixed at voluntary points of said support arms, whereby the component of said forces being perpendicular to the axis of the levers (1) will be measured.

5. Device according to one of the claims 1—4, characterized in that the instrument (6) for measuring is positioned such that the direction of the measurement is perpendicular to the direction of the axis of the levers (1).

6. Device according to one of the claims 1—5, characterized in that the lever bars (1) are plate springs.

7. Device according to one of the claims 1—6, characterized in that the lever bars (1) are formed by two pivoting points connected within a non-elastic lever.

8. Device according to one of the claims 1—7, characterized in that the pivots are built up by knife edges in the pivoting point.

9. Device according to one of the claims 1—8, characterized in that the tare weight is compensated by the force of a reinforced spring (12).

10. Device according to one of the claims 1—9, characterized in that the support (4) is a silo.

## Patentansprüche

1. Vorrichtung zum Übertragen von zu messenden Kräften zu einem Kraftmeßinstrument (6), mit einer Aufnahme (4) zum Aufnehmen und Einwirken der Kräfte auf das Instrument (6), wobei die Aufnahme (4) im wesentlichen in Richtung der Kräfte bewegbar ist und eine Hebelanordnung (1) aufweist, die zwischen der Aufnahme (4) und einem festen Rahmen (2) oder einer Wand angeordnet ist, und wobei die Hebelanordnung zumindest zwei Hebel (1) von im wesentlichen gleicher Länge aufweist, die einerseits mit einem Ende an der Wand oder dem Gestell (2) und andererseits an der Aufnahme für die zu messenden Kräfte gelenkig derart angebracht sind, daß die Projektionen der Achsen zumindest zweier Hebel (1) auf eine Ebene senkrecht zur Achse dieser Hebel und parallel zur Richtung der Bewegung der Aufnahme (4) in Richtung der Bewegung einen Abstand voneinander aufweisen, dadurch gekennzeichnet, daß Mittel zum Schutz gegen Überlastung des Kraftmeßinstruments (6) vorgesehen sind, bestehend aus einem durch eine Feder (9) verstärkten geradlinig belasteten Kolben (7), wobei die Federverstärkung so gewählt ist, daß der Kolben sich nur dann bewegt, wenn die zu messende Kraft größer wird als die Nominalkraft des Kraftmeßinstruments (6), und die Bewegung der Aufnahme (4) derart durch ein Anschlagstück (8) begrenzt wird, daß die Kraft auf das Instrument (6) gleich der Verstärkung und Auslenkung der Feder unter der maximal erlaubten Kraft auf das Instrument bleibt.

2. Vorrichtung nach Anspruch 1, dadurch gekennzeichnet, daß die Aufnahme (4) Arme aufweist, die sich auf einer Ebene parallel zur Achse der Hebel (1) und parallel zur Richtung der Bewegung der Aufnahme erstrecken.

3. Vorrichtung nach Anspruch 2, dadurch gekennzeichnet, daß sich die Arme der Aufnahme in der Ebene in einer beliebigen Richtung erstrecken.

4. Vorrichtung nach Anspruch 2 oder 3, dadurch gekennzeichnet, daß die zu messenden Kräfte an beliebigen Punkten der Trägerarme angreifen können, wobei die Komponente der Kräfte, die senkrecht zur Achse der Hebel verläuft, gemessen wird.

5. Vorrichtung nach mindestens einem der Ansprüche 1 bis 4, dadurch gekennzeichnet, daß das Meßinstrument so angeordnet ist, daß die Meßrichtung senkrecht zur Richtung der Achse der Hebel ist.

6. Vorrichtung nach einem der Ansprüche 1 bis 5, dadurch gekennzeichnet, daß die Hebel (1) Blattfedern sind.

7. Vorrichtung nach einem der Ansprüche 1 bis 6, dadurch gekennzeichnet, daß die Hebelanordnung zwei Schwenkpunkte aufweist, die mit einem nicht elastischen Hebel verbunden sind.

8. Vorrichtung nach einem der Ansprüche 1 bis 7, dadurch gekennzeichnet, daß die Gelenke als Schneidkantenleger in den Gelenkpunkten ausgebildet sind.

9. Vorrichtung nach einem der Ansprüche 1 bis 8, dadurch gekennzeichnet, daß das Taragewicht durch die Kraft einer verstärkten Feder (12) kompensiert wird.

10. Vorrichtung nach Anspruch 1 bis 9, dadurch gekennzeichnet, daß die Aufnahme (4) ein Silo ist.

**Revendications**

1. Dispositif pour transférer des forces devant être mesurées vers un instrument (6) de mesure de forces, comprenant un support (4) recevant les forces et agissant sur ledit instrument (6), ledit support étant mobile essentiellement dans la direction desdites forces et compprenant un ensemble de leviers (1) diposés entre ledit support (4) et un cadre fixe (2) ou paroi, ledit ensemble de leviers (1) comprenant au moins deux leviers (1) de longueur identique, ces leviers (1) ayant des pivots fixés, d'une part, avec une extrémité, sur la paroi ou cadre fixe (2) et, d'autre part, sur le support (4) des forces dévant être mesurées, les projections des axes de l'ensemble de leviers (1) dans une direction perpendiculaire à l'axe desdits leviers (1) et parallèle à la direction du mouvement dudit support (4) étant séparées l'une de l'autre dans la direction dudit mouvement, caractérisé en ce qu'il comprend un moyen de protection contre la surcharge de l'instrument (6) de mesure des forces, ledit moyen consistant en un piston (7) positionné en support linéaire et renforcé par un ressort (9), ce renforcement par ressort étant tel que le piston se déplace seulement lorsque la force devant être mesurée devient supérieure à la force nominale de l'instrument (6) de mesure des forces, et en ce que le mouvement dudit support (4) est limité par une pièce d'arrêt (8), de telle manière que la force sur l'instrument (6), égale au renforcement et au fléchissement du ressort, reste inférieure à la force maximale autorisée pour l'instrument (6).

2. Dispositif selon la revendication 1, caractérisé en ce que le support (4) comprend des bras qui s'étendent dans un plan parallèle à l'axe des leviers (1) et parallèle à la direction du mouvement du support (4).

3. Dispositif suivant la revendication 2, caractérisé en ce que lesdits bras de support ont une direction volontaire dans ledit plan.

4. Dispositif selon l'une des revendications 2 ou 3, caractérisé en ce que lesdites forces devant être mesurées peuvent être fixées à des points intentionnels desdits bras de support, et dans lequel la composante desdites forces perpendiculaires à l'axe des leviers (1) sera mesurée.

5. Dispositif suivant l'une quelconque des revendications 1 à 4, caractérisé en ce que l'instrument (6) de mesure est positionné de telle manière que la direction de la mesure est perpendiculaire à la direction de l'axe des leviers (1).

6. Dispositif selon l'une quelconque des revendications 1 à 5, caractérisé en ce que les barres des leviers (1) sont constituées par des ressorts à lames.

7. Dispositif suivant l'une quelconque des revendications 1 à 6, caractérisé en ce que les barres des leviers (1) sont formées par deux points pivotants reliés par un levier non élastique.

8. Dispositif selon l'une quelconque des revendications 1 à 7, caractérisé en ce que les pivots comportent des tranchants de couteau sur les points pivotants.

9. Dispositif suivant l'une quelconque des revendications 1 à 8, caractérisé en ce que le poids du dispositif est compensé par la force d'un ressort renforcé (12).

10. Dispositif selon l'une quelconque des revendications 1 à 9, caractérisé en ce que le support (4) est constitué par un silo.

# FIG. 1

FIG. 2

EP 0 191 900 B1